# EUROPEAN PATENT SPECIFICATION

(11) **EP 3 059 434 B1**
(45) Date of publication and mention of the grant of the patent: **02.05.2018**
(21) Application number: 14849931.2
(22) Date of filing: 16.09.2014
(51) Int. Cl.: F02M 35/10, F02B 29/04, F02M 26/00, F28F 17/00, B01D 45/08, F02M 35/08, F02M 26/15, F02M 26/22, F02M 35/022, F28F 9/22

(54) **CONDENSATION WATER SEPARATION DEVICE**
TRENNVORRICHTUNG FÜR KONDENSIERTES WASSER
DISPOSITIF DE SÉPARATION D'EAU DE CONDENSATION

(30) Priority: 30.09.2013 JP 2013204561
(43) Date of publication of application: 24.08.2016
(73) Proprietor: Mitsubishi Jidosha Kogyo Kabushiki Kaisha, Tokyo 108-8410 (JP); Mitsubishi Jidosha Engineering Kabushiki Kaisha, Okazaki-shi Aichi 444-8501 (JP)
(72) Inventor: KIMURA, Hiroyuki, Tokyo 108-8410 (JP); ISHII, Hajime, Okazaki-shi Aichi 444-8501 (JP)
(74) Representative: Vossius & Partner Patentanwälte Rechtsanwälte mbB
(86) International application number: PCT/JP2014/074399
(87) International publication number: WO 2015/045952

(56) References cited:
- AT-A1- 510 333
- DE-A1- 10 200 673
- FR-A3- 2 919 349
- JP-A- H05 280 437
- JP-A- H07 293 373
- JP-A- 2001 132 555
- JP-A- 2001 132 555
- JP-A- 2012 180 756
- JP-A- 2012 180 756
- US-B1- 6 312 488

## Description

### FIELD

The present invention relates to separators that separate condensed water generated during cooling of intake air or exhaust of engines (internal combustion engines) from the intake air or exhaust.

### BACKGROUND

Intercoolers have been practically used for improving the output of engines. The intercooler exchanges heat between supercharged intake air and outside air to cool the intake air. Cooling the intake air improves the volumetric efficiency in the combustion chamber and the output of the engine.

Exhaust gas recirculation (EGR) systems have been practically used for reducing the amount of nitrogen oxides (hereinafter referred to as "NOx") in exhaust. In the EGR system, exhaust cooled by the EGR cooler is recirculated into the intake system and then fed into the combustion chamber again together with fresh air (intake air). This reduces the combustion temperature of the fuel or the oxygen level in the combustion chamber, resulting in a decrease in NOx emission.

When coolers, such as intercoolers and EGR coolers, cool intake air or exhaust, water vapor contained in the intake air or exhaust is condensed depending on the temperature and pressure of the intake air or exhaust to generate water (hereinafter referred to as "condensed water"). For example, Japanese Unexamined Patent Application Publication No. 2013-11227 discloses a separator that separates such condensed water from intake air or exhaust. This separator includes a condensed water tank that is disposed downstream of an EGR cooler and stores the condensed water. The condensed water tank is provided with an inflow port from which recirculated exhaust (EGR gas) flows in downward, an outflow port from which the exhaust flows out upward, and a filter disposed between the inflow port and the outflow port. The filter captures the condensed water contained in the exhaust passing therethrough. This separator captures the condensed water from the exhaust passing through the filter and thus stores the condensed water in the condensed water tank. The condensed water is separated from the EGR gas in such a way.

### Related Art Document

### Patent Document

Patent Document 1: Japanese Unexamined Patent Application Publication No. 2013-11227

### SUMMARY

### TECHNICAL PROBLEMS

Unfortunately, in the separator according to Japanese Unexamined Patent Application Publication No. 2013-11227, the exhaust flows downward into the condensed water tank and thus collides with the surface of the stored condensed water, promoting atomization or vaporization of the condensed water. Consequently, some of the condensed water passes or slips through the filter. Similarly, if the intake air flowing into the condensed water tank disposed downstream of the intercooler collides with the stored condensed water, some of the condensed water may flow out to the downstream side. The condensed water flowing into the combustion chamber may cause unstable combustion during, for example, low-temperature combustion or idling of the engine and a failure in output of a requested torque during high-load operation of the engine. The condensed water not separated from the intake air or exhaust may cause such problems. US 6 312 488 discloses another condensed water separator, wherein a gas inlet pipe and a gas outlet pipe are parallel and overlap with each other. However, condensed water may flow along the inner wall of the water separator into the outlet pipe.

An object of the present invention, which has been conceived in light of the problems described above, is to provide a condensed water separator that can reliably separate condensed water from intake air or exhaust.

Another object of the present invention is to achieve advantageous effects that cannot be achieved through the traditional art by employing the configurations described below in the embodiments of the present invention.

### SOLUTION TO PROBLEMS

The invention is defined by the features of the independent claim.
(1) The condensed water separator in accordance with the present invention is disposed downstream of a cooler cooling the intake air or exhaust of the engine and separates condensed water generated by condensation of part of the intake air or exhaust from the intake air or exhaust. The condensed water separator includes a tank storing the condensed water, an upstream pipe in communication with both the cooler and the tank, the upstream pipe defining a flow path of the intake air or exhaust from the cooler to the tank, and a downstream pipe defining a flow path of the intake air or exhaust downstream of the tank. The tank has an inner wall surface being a colliding surface with which the intake air or exhaust flowing out from the downstream end of the upstream pipe collides . The downstream pipe has an upstream end disposed inside the tank and separated from the colliding surface of the tank.
   That is, the upstream end of the downstream pipe extends to the interior of the tank. The upstream end of the downstream pipe is separated from the inner wall surface being the colliding surface.
(2) The upstream end of the downstream pipe is preferably disposed more distant from the colliding surface than the downstream end of the upstream pipe. In other words, the downstream end of the upstream pipe is preferably disposed closer to the colliding surface than the upstream end of the downstream pipe.
(3) The downstream end of the upstream pipe is preferably disposed closer to the colliding surface than the upstream end of the downstream pipe. For example, it is preferred that the upstream pipe and the downstream pipe vertically overlap with each other when viewed from the direction perpendicular to the direction of the extending downstream end of the upstream pipe. In other words, the upstream pipe and the downstream pipe are preferably paralleled vertically in a lateral view.
(4) The upstream end of the downstream pipe is preferably disposed above the downstream end of the upstream pipe. In other words, the downstream end of the upstream pipe is preferably disposed below the upstream end of the downstream pipe.
(5) The condensed water separator preferably includes a filter disposed between the downstream end of the upstream pipe and the upstream end of the downstream pipe in the tank, the filter separating the condensed water from the flowing intake air or exhaust.
(6) Preferably, the colliding surface is disposed vertically.
(7) The colliding surface preferably has a guide that is disposed outside an inner diameter of the upstream pipe when viewed from the axial direction of the upstream pipe and that guides the condensed water. The guide may be a continuous groove provided on the colliding surface or a continuous rib provided on the colliding surface.
(8) The colliding surface preferably has higher affinity to the condensed water than affinity to the condensed water of a smooth surface.
(9) The tank preferably has an outer wall provided with fins.
(10) The condensed water separator preferably includes a flow restrictor inwardly protruding from the tank.

### ADVANTAGEOUS EFFECTS

The condensed water separator in accordance with the present invention includes a tank that has an inner wall surface being a colliding surface with which the intake air or exhaust flowing out from the downstream end of an upstream pipe collides . This configuration allows the intake air or exhaust containing condensed water to collide with the colliding surface. The condensed water adheres to the colliding surface due to the collision and then flows down by gravity. That is, the condensed water collides with the colliding surface and then flows along the colliding surface or the inner wall surface of the tank having the colliding surface to be stored in the tank. The intake air or exhaust after separation of the condensed water is supplied to the engine through a downstream pipe.

The upstream end of the downstream pipe is disposed inside the tank and separated from the colliding surface. This configuration prevents the colliding condensed water from flowing in the downstream pipe along the colliding surface. The bounced or splashed condensed water is also prevented from flowing in the downstream pipe.

These configurations can reliably separate the condensed water from the intake air or exhaust.

### BRIEF DESCRIPTION OF DRAWINGS

FIG. 1 is a schematic overall view of a condensed water separator in accordance with an embodiment of the present invention and the intake and exhaust systems of an engine including the condensed water separator. The hollow arrows indicate the direction of the circulated intake air, the solid arrows indicate the direction of the circulated exhaust, and the shaded arrows indicate the direction of exhaust (EGR gas) recirculated into the intake system.
FIG. 2 is an enlarged schematic view of the main portion of the condensed water separator in accordance with an embodiment of the present invention.
FIG. 3 is a cross-sectional view taken from the line A-A of FIG. 2.
FIG. 4(a) and FIG. 4(b) are schematic views of a first modification of the condensed water separator in accordance with an embodiment of the present invention. FIG. 4(a) illustrates a portion corresponding to FIG. 2, and FIG. 4(b) is a cross-sectional view taken from the line B-B of FIG. 4 (a) . In FIG. 4(b), the dashed arrows indicate the direction of the flow of the condensed water.
FIG. 5 is a schematic view of a second modification of the condensed water separator in accordance with an embodiment of the present invention. FIG. 5 illustrates a portion corresponding to FIG. 2.
FIG. 6(a) and FIG. 6(b) are schematic views of a third modification of the condensed water separator in accordance with an embodiment of the present invention. FIG. 6(a) illustrates a portion corresponding to FIG. 2, and FIG. 6(b) is a cross-sectional view taken from the line C-C of FIG. 6(a).
FIG. 7 is a schematic view of a fourth modification of the condensed water separator in accordance with an embodiment of the present invention. FIG. 7 illustrates a portion corresponding to FIG. 2.
FIG. 8 is a schematic view of a fifth modification of the condensed water separator in accordance with an embodiment of the present invention. FIG. 8 illustrates a portion corresponding to FIG. 2.
FIG. 9 is a schematic view of a sixth modification of the condensed water separator in accordance with an embodiment of the present invention. FIG. 9 illustrates a portion corresponding to FIG. 2.

### DESCRIPTION OF EMBODIMENTS

Embodiments of the present invention will now be described with reference to the attached drawings. A condensed water separator in accordance with the present invention separates condensed water generated by condensation of some moisture in intake air or exhaust of an engine from the cooled intake air or exhaust. That is, the condensed water separator can be applied to the intake and exhaust systems of engines. An engine including the condensed water separator in accordance with the present invention can be mounted in various types of vehicles, such as automobiles and railroad vehicles.

In the embodiments, the terms "upstream" and "downstream" refer to those in the direction of circulated intake air or exhaust. The gravitating direction is referred to as downward while the opposite direction is referred to as upward.

### [An Embodiment]

### [1. Configuration]

### [1-1. Engine and Its Intake and Exhaust Systems]

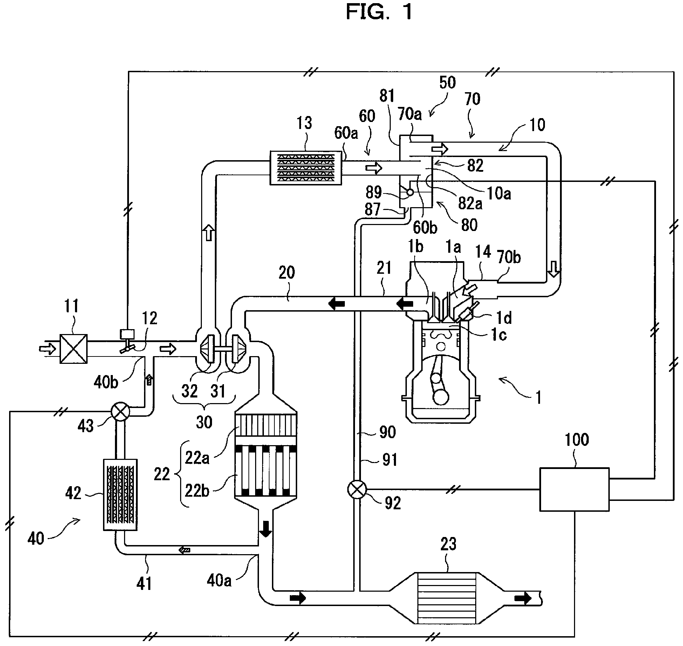

The configurations of the intake and exhaust systems of an engine 1 will now be described with reference to FIG. 1. The description will be in the order of the engine 1, a turbocharger (supercharger) 30 and an EGR system 40 disposed between the intake system and the exhaust system, the intake system, and the exhaust system.

The engine 1 is an internal combustion engine that drives the vehicle to travel. In this embodiment, the engine 1 is a diesel engine that runs on light oil. The engine 1 has multiple cylinders, which are omitted in the drawing.

The engine 1 is provided with an intake port 1a and an exhaust port 1b that communicate with a combustion chamber 1c. Intake air flows through the intake port 1a into the combustion chamber 1c, and exhaust flows out from the combustion chamber 1c through the exhaust port 1b.

The engine 1 is provided with injectors 1d (Only one is illustrated in FIG. 1.) that inject fuel into the respective cylinders. The injectors 1d of the cylinders are connected to a single common rail, which is not illustrated in detail in the drawing. High-pressure fuel is supplied from a supply pump (high-pressure pump), stored in the common rail, and fed from the common rail to each injector 1d. The fuel injected into the corresponding cylinder of the injector 1d is mixed with the intake air and burned in the cylinder.

The engine 1 is provided with the components of the intake system upstream of the intake port 1a and the components of the exhaust system downstream of the exhaust port 1b. In specific, a path 10 for circulating the intake air flowing into the engine 1 (hereinafter referred to as an "intake path") is defined upstream of the intake port 1a, and a path 20 for circulating the exhaust flowing out from the engine 1 (hereinafter referred to as an "exhaust path") downstream of the exhaust port 1b.

The turbocharger 30 compresses the intake air. The turbocharger 30 includes a turbine 31 and a compressor 32 that are coaxial. The turbine 31 and the compressor 32 are connected with each other so as to rotate together. The turbine 31 is disposed on the exhaust path 20, and the compressor 32 on the intake path 10. In the turbocharger 30, the exhaust rotates the turbine 31 and thus the compressor 32 to compress the intake air. The intake air is supercharged in this way.

A bypass in communication with both the upstream and downstream sides of the turbine 31 may be disposed on the exhaust path 20 to provide such an exhaust structure that part of the exhaust makes a detour from the turbine 31. Similarly, a bypass in communication with both the upstream and downstream sides of the compressor 32 may be disposed on the intake path 10 to provide such an intake structure so as to limit the rotation speed of the compressor 32.

The exhaust gas recirculation (EGR) system 40 recirculates the exhaust into the intake path 10 to reduce the emission of nitrogen oxides (hereinafter referred to as "NOx") . In specific, the exhaust circulated in the exhaust path 20 downstream of the turbine 31 is recirculated into the intake path 10 upstream of the compressor 32.

The EGR system 40 includes an EGR pipe 41 connecting one end 40a on the exhaust side (upstream end) with the other end 40b on the intake side (downstream end), and an EGR cooler (cooler) 42 and an EGR valve 43 disposed on the EGR pipe 41. The EGR cooler 42 is disposed on the one end 40a side with respect to the EGR valve 43.

The recirculated exhaust (EGR gas) flows inside the EGR pipe 41.

The EGR cooler 42 cools the recirculated exhaust. The EGR cooler 42 exchanges heat between the recirculated exhaust and outside air to cool the recirculated exhaust.

The EGR valve 43 adjusts the flow rate of exhaust recirculated. In this embodiment, the EGR valve 43 opens variably.

The intake system is provided with an air cleaner 11, a throttle valve 12, the compressor 32, an intercooler (cooler) 13, a condensed water separator 50, and an intake manifold 14 in the order of the circulation of fresh intake air.

The air cleaner 11 is a filter that removes foreign matter in fresh intake air.

The throttle valve 12 varies its opening to adjust the flow rate of fresh intake air. The other end 40b of the EGR system 40 is connected downstream of the throttle valve 12 and upstream of the compressor 32, and the throttle valve 12 indirectly adjusts the flow rate of the exhaust recirculated by the EGR system 40.

The intercooler 13 cools the intake air. The intercooler 13 exchanges heat between the intake air and outside air to reduce intake air temperature increased due to supercharge at the turbocharger 30 and thus recovers a decrease in the density of the intake air.

A section 10a lowest in the intake path 10 (hereinafter referred to as a "lowest section") is disposed downstream of the intercooler 13 and upstream of the intake manifold 14 on the intake path 10. The condensed water separator 50 (described in detail later) is disposed at the lowest section 10a.

The intake manifold 14 branches toward the cylinders of the engine 1. A surge tank, which is not illustrated in detail in the drawing, is disposed immediately upstream of the intake manifold 14 for reducing intake-air pulsation and interference that may occur in the cylinders.

The exhaust system is provided with an exhaust manifold 21, the turbine 31, a primary exhaust-treating device 22, and a secondary exhaust-treating device 23 in the order of the circulation of the exhaust.

The exhaust manifold 21 has multiple branches merging together from the cylinders of the engine 1.

The primary exhaust-treating device 22 treats particulate matter (hereinafter referred to as "PM") in the exhaust. The primary exhaust-treating device 22 includes a diesel oxidation catalyst (DOC) 22a disposed upstream of and a diesel particulate filter (DPF) 22b disposed downstream of the system.

The DOC 22a can oxidize components in the exhaust. The DOC 22a is, for example, a honeycomb carrier, such as cordierite and ceramics, that is fixed to the inside of a casing, is coated with alumina powder, and is loaded with particles of catalytic precious metal, such as platinum, rhodium, or palladium.

The components, to be oxidized by the action of the DOC 22a, in the exhaust include nitrogen monoxide (NO), nitrogen dioxide (NO₂), and hydrocarbon (HC) and carbon monoxide (CO) in unburned fuel.

The DPF 22b is a porous filter for capturing the PM contained in the exhaust. The DPF 22b has multiple parallel paths that are separated by walls and are in communication with both the upstream and downstream sides. The upstream openings and the downstream openings of these paths are alternately closed. The walls have a large number of holes with a size less than the size of the PM. When the exhaust containing PM passes through the DPF 22b, the PM is captured in and on the walls.

The primary exhaust-treating device 22 oxidizes (burns) the reduced components in the exhaust with the DOC 22a to generate heat of combustion and thus increases the temperature of the DPF 22b disposed downstream of the DOC 22a to burn the PM captured with the DPF 22b (DPF regeneration).

The one end 40a of the EGR system 40 and the condensed water separator 50 (described later) are connected downstream of the primary exhaust-treating device 22 and upstream of the secondary exhaust-treating device 23 in this order from the upstream side.

The secondary exhaust-treating device 23 cleans NOx contained in the exhaust. In specific, the secondary exhaust-treating device 23 is a urea-added NOx selective catalytic reduction. Examples of the catalyst carried in the secondary exhaust-treating device 23 include a vanadium oxide catalyst and a zeolite catalyst containing a transition metal. A urea supply system, which is omitted in the drawing, is disposed for supplying a urea solution to the exhaust path 20 upstream of the secondary exhaust-treating device 23.

Urea [(NH₂)₂CO] supplied upstream of the secondary exhaust-treating device 23 is hydrolyzed to be ammonia (NH₃), which functions as a reductant for NOx in the exhaust at the secondary exhaust-treating device 23. Ammonia is generated at a predetermined exhaust temperature (for example, 180 to 200°C) or higher and reduces NOx, such as nitrogen monoxide and nitrogen dioxide, to nitrogen (N₂).

### [1-2. Condensed Water Separator]

The configuration of the condensed water separator 50 applied to the intake and exhaust systems of the engine 1 will now be described.

The condensed water separator 50 separates the condensed water from the intake air. The condensed water separator 50 described below separates the condensed water from the intake air flowing downstream of the intercooler 13 and upstream of the intake manifold 14. The condensed water separator 50 is disposed at the lowest section 10a vertically lowest in the intake path 10 as described above.

The condensed water separator 50 includes an upstream pipe 60, a downstream pipe 70 disposed downstream of the upstream pipe, a tank 80 in communication with both pipes 60 and 70 for storing the condensed water separated from the intake air, and a condensed water path 90 in which the condensed water stored in the tank 80 flows.

The configurations will be described in detail in the order of the tank 80, the upstream pipe 60, the downstream pipe 70, and the condensed water path 90.

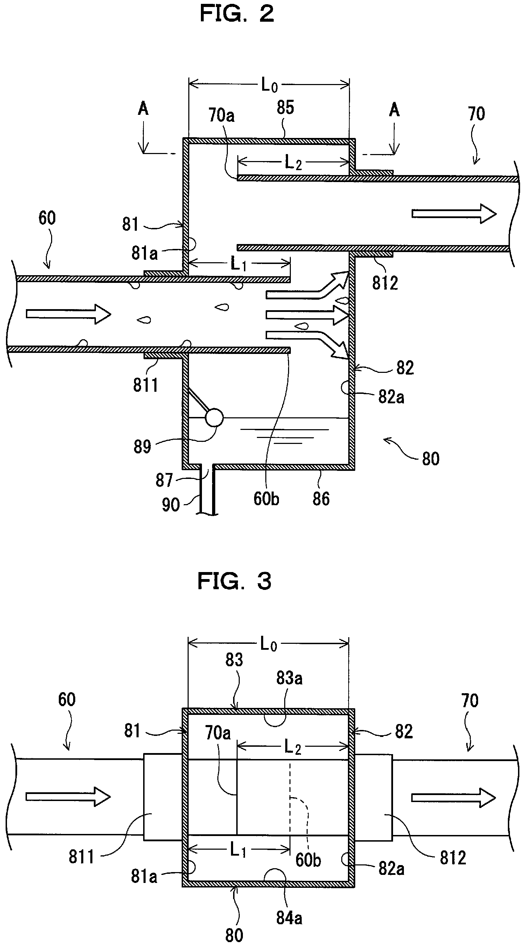

The tank 80 stores the condensed water and defines the intake path 10 from the upstream pipe 60 to the downstream pipe 70. A cuboid tank 80 is exemplified in this embodiment. The tank 80 has four vertical walls 81, 82, 83, and 84 (See FIG. 3), a top surface 85 connecting the tops of the walls 81, 82, 83, and 84 (See FIG. 2), and a bottom surface 86 connecting the bottoms of the walls 81, 82, 83, and 84 (See FIG. 2).

With reference to FIG. 3, the four walls 81, 82, 83, and 84 consist of a first wall 81, a second wall 82, a third wall 83, and a fourth wall 84 that are disposed vertically.

With reference to FIGs. 2 and 3, the first wall 81 and the second wall 82 face each other. The first wall 81 is provided with a first cylindrical protrusion 811 extending outward from the tank 80, and the upstream pipe 60 is fit inside the protrusion 811. Similarly, the second wall 82 is provided with a second cylindrical protrusion 812 extending outward from the tank 80, and the downstream pipe 70 is fit inside the protrusion 812. With reference to FIG. 3, the third wall 83 and the fourth wall 84 face each other. The third wall 83 connects one side of the first wall 81 with one side of the second wall 82, and the fourth wall 84 connects the other side of the first wall 81 with the other side of the second wall 82. Hereinafter the inner surfaces of the first, second, third, and fourth walls 81, 82, 83, and 84 are respectively referred to as a first inner wall surface 81a, a second inner wall surface 82a, a third inner wall surface 83a, and a fourth inner wall surface 84a.

With reference to FIG. 2, the top surface 85 is the ceiling of the tank 80. The bottom surface 86 is provided with a drain outlet 87. In FIG. 2, the bottom surface 86 is horizontally disposed. Alternatively, the bottom surface 86 may have a slope such that the drain outlet 87 is located vertically lowest.

The tank 80 is provided with a float switch 89 that outputs an ON or OFF signal depending on the level of the stored condensed water. The float switch 89 outputs an ON signal if the level of the condensed water is higher than a predetermined level or an OFF signal if the level of the condensed water is equal to or lower than the predetermined level. The information on the ON or OFF signal output from the float switch 89 is sent to a controller 100, which will be described later (See FIG. 1).

The predetermined level, which is experimentally or empirically determined, indicates a level at which the condensed water should be discharged. The predetermined level is preferably determined to be lower than the vertically lowest point of the downstream end 60b of the upstream pipe 60.

With reference to FIG. 1, the upstream pipe 60 has an upstream end 60a connected with the intercooler 13 and a downstream end 60b extending to the interior of the tank 80. That is, the upstream pipe 60 communicates with both the intercooler 13 and the tank 80 and defines the intake path 10 from the intercooler 13 to the tank 80. The downstream end 60b and its vicinity of the upstream pipe 60 are linear.

The downstream end 60b of the upstream pipe 60 is open, and the intake air flows through the opening into the tank 80. In other word, the intake air flows from the downstream end 60b of the upstream pipe 60 into the tank 80.

With reference to FIGs. 1 to 3, the upstream pipe 60 is connected with the first wall 81 of the tank 80. In specific, the first protrusion 811 of the first wall 81 defines an opening having an inner diameter slightly larger than the outer diameter of the upstream pipe 60, and the upstream pipe 60 is inserted into and fixed to the opening as shown in FIGs. 2 and 3.

The downstream end 60b (illustrated with the dashed line in FIG. 3) of the upstream pipe 60 is separated from the first inner wall surface 81a of the first wall 81 and the second inner wall surface 82a of the second wall 82 in the tank 80. The downstream end 60b of the upstream pipe 60 is also separated from the third inner wall surface 83a of the third wall 83 and the fourth inner wall surface 84a of the fourth wall 84.

That is, the downstream end 60b of the upstream pipe 60 protrudes from the first inner wall surface 81a toward the second inner wall surface 82a so as to face the second inner wall surface 82a in the tank 80. In other words, the downstream end 60b of the upstream pipe 60 is disposed between the first inner wall surface 81a and the second inner wall surface 82a. The downstream end 60b has a length L₁ from the first inner wall surface 81a to the downstream end 60b.

The intake air flowing out from the opening defined by the downstream end 60b of the upstream pipe 60 collides with part of the second inner wall surface 82a facing the opening at the downstream end 60b of the upstream pipe 60. Hereinafter the second inner wall surface 82a is referred to as a colliding surface 82a.

In this embodiment, the expanding plane of the opening defined by the downstream end 60b of the upstream pipe 60 is parallel to the colliding surface 82a. That is, the colliding surface 82a is perpendicular to the direction of the intake air flowing out from the downstream end 60b of the upstream pipe 60.

With reference to FIG. 1, the downstream pipe 70 has an upstream end 70a communicating with the interior of the tank 80 and a downstream end 70b connected through the intake manifold 14 to the engine 1. That is, the downstream pipe 70 defines the intake path 10 from the tank 80 through the intake manifold 14 to the engine 1, i.e., downstream of the tank 80. The upstream pipe 60 and the downstream pipe 70 define the intake path 10 from the intercooler 13 to the engine 1.

The upstream end 70a of the downstream pipe 70 is open, and the intake air flows from the interior of the tank 80 to the opening. That is, the intake air in the tank 80 flows from the upstream end 70a of the downstream pipe 70 toward the engine 1.

With reference to FIGs. 1 to 3, the downstream pipe 70 is connected with the second wall 82 of the tank 80. In specific, the second protrusion 812 of the second wall 82 defines an opening having an inner diameter slightly larger than the outer diameter of the downstream pipe 70, and the downstream pipe 70 is inserted into and fixed to the opening as shown in FIGs. 2 and 3.

The upstream end 70a of the downstream pipe 70 is separated from the first inner wall surface 81a of the first wall 81 and the colliding surface 82a of the second wall 82 in the tank 80. The upstream end 70a of the downstream pipe 70 is also separated from the third inner wall surface 83a of the third wall 83 and the fourth inner wall surface 84a of the fourth wall 84.

That is, the upstream end 70a of the downstream pipe 70 protrudes from the colliding surface 82a toward the first inner wall surface 81a so as to face the second inner wall surface 82a in the tank 80. In other words, the upstream end 70a of the downstream pipe 70 is disposed between the first inner wall surface 81a and the colliding surface 82a. The upstream end 70a has a length L₂ from the colliding surface 82a to the upstream end 70a.

The upstream end 70a of the downstream pipe 70 is more distant from the colliding surface 82a than the downstream end 60b of the upstream pipe 60. In other words, the downstream end 60b of the upstream pipe 60 is closer to the colliding surface 82a than the upstream end 70a of the downstream pipe 70. When Lo represents the inner dimension between the first inner wall surface 81a and the colliding surface 82a, the lengths L₁ and L₂ of the upstream pipe 60 and the downstream pipe 70 are determined so as to satisfy the inequality "L₁+L₂>L₀".

That is, the downstream end 60b of the upstream pipe 60 is disposed closer to the colliding surface 82a than the upstream end 70a of the downstream pipe 70.

The upstream end 70a of the downstream pipe 70 is disposed above the downstream end 60b of the upstream pipe 60. In other words, the downstream end 60b of the upstream pipe 60 is disposed below the upstream end 70a of the downstream pipe 70. In specific, the upstream pipe 60 and the downstream pipe 70 overlap with each other in a top view as shown in FIG. 3.

In this embodiment, the downstream end 60b and its upstream side of the upstream pipe 60 and the upstream end 70a and its downstream side of the downstream pipe 70 overlap vertically with each other when viewed from the direction perpendicular to the direction of the extending downstream end 60b of the upstream pipe 60. In other words, the upstream pipe 60 and the downstream pipe 70 are paralleled vertically in a lateral view as shown in FIG. 2.

With reference to FIGs. 1 and 2, the condensed water path 90 is connected to the drain outlet 87 disposed on the bottom surface 86 of the tank 80. The condensed water path 90 is defined inside a condensed water pipe 91 (See FIG. 1).

With reference to FIG. 1, the condensed water pipe 91 is provided with a switching valve 92. The switching valve 92 switches between the discharge of the condensed water to the exhaust system and the stop of the discharge. The switching valve 92 is opened to discharge the condensed water to the exhaust system and closed to keep the condensed water in the tank 80. The condensed water path 90 is connected between the one end 40a of the EGR system 40 and the secondary exhaust-treating device 23.

### [1-3. Controller]

The configuration of the controller 100 controlling the condensed water separator 50 will now be described.

The controller 100 is an integrated electronic device including a microprocessing unit (MPU) such as a central processing unit (CPU), read-only memory (ROM), random-access memory (RAM), and nonvolatile memory. The MPU includes a control unit (control circuit), an arithmetic unit (arithmetic circuit), and cache memory (registers). The ROM, RAM and nonvolatile memory store programs and data being worked on. Examples of the nonvolatile memory include flash memory, phase-change memory, resistive RAM, ferroelectric RAM, and magnetoresistive RAM. The data controlled at the controller 100 is recorded, for example, as an application program in the ROM and the nonvolatile memory. After the content of the program is loaded into memory space in the RAM and the nonvolatile memory, the MPU executes the program.

The controller 100 controls a wide variety of systems related to the intake and exhaust systems of the engine 1. For the control of the systems, the controller 100 has input terminals connected with various sensors (omitted in the drawings), such as the float switch 89, and output terminals connected to the controlled objects which are the valves 12, 43, and 92 and other units (omitted in the drawings).

In this embodiment, the description focuses on the control of the EGR system 40 and the condensed water separator 50 at the controller 100.

The EGR system 40 is controlled mainly by varying the opening of the EGR valve 43 and supplementarily by varying the opening of the throttle valve 12. These valves 12 and 43 are opened variably to control the flow rate of the recirculated exhaust. The controller 100 controls the opening of the valves 12 and 43 to control the flow rate of the recirculated exhaust on the basis of the information sent from the sensors (omitted in the drawings) and indicating the operating state of the engine 1 and the state of the exhaust.

The condensed water separator 50 is controlled by opening or closing the switching valve 92.

The controller 100 executes control of discharge for opening the switching valve 92 in response to the input of the ON signal from the float switch 89. After the control of discharge opens the switching valve 92, the condensed water stored in the tank 80 is discharged through the condensed water path 90 to the exhaust path 20.

After the lapse of a predetermined time from the start of the control of discharge, the controller 100 executes control of storage for closing the switching valve 92. After the control of storage closes the switching valve 92, the condensed water is kept in the tank 80. The predetermined time, which is experimentally or empirically determined, indicates a time required to discharge the condensed water in the tank 80.

The control of storage and the control of discharge are not simultaneously executed.

### [2. Advantageous Effects]

The advantageous effects that can be achieved by the condensed water separator 50 having the configuration in accordance with this embodiment will now be described.

Fresh intake air is supercharged to the turbocharger 30 and cooled at the intercooler 13 during the operation of the engine 1. Moisture contained in the intake air (part of the intake air) is condensed to generate condensed water depending on the pressure and temperature of the intake air.

The exhaust contains a larger amount of moisture than fresh air because of moisture generated in combustion. Consequently, if the EGR valve 43 of the EGR system 40 is opened, i.e., if the exhaust is recirculated into the intake path 10, the condensed water is generated more than without the recirculated exhaust.

This indicates that the intake air flowing through the intercooler 13 and its downstream side contains the condensed water. For example, the particles of the atomized condensed water are suspended in the intake air. The condensed water flowing down from the intercooler 13 and the condensed water generated by condensation of the moisture in the intake air adhere to the inner wall surface of the upstream pipe 60 connected downstream of the intercooler 13. Such condensed water flows in the upstream pipe 60 from the upstream end 60a to the downstream end 60b together with the intake air flowing in the upstream pipe 60.

The intake air flowing from the downstream end 60b of the upstream pipe 60 into the tank 80 rapidly expands its cross-sectional area, thus decreases its speed, and then collides with the colliding surface 82a.

The condensed water contained in the intake air and the condensed water flowing along the inner wall surface of the upstream pipe 60 have mass greater than the intake air and thus fly out from the downstream end 60b of the upstream pipe 60 toward the colliding surface 82a due to the inertial force of the condensed water. The condensed water then collides with the colliding surface 82a or drops down from the downstream end 60b of the upstream pipe 60 into the tank 80. The colliding condensed water adheres to the colliding surface 82a and flows down by gravity. That is, the condensed water collides with the colliding surface 82a and then flows along the inner wall surfaces 81a to 84a including the colliding surface (second inner wall surface) 82a. If the switching valve 92 is closed at this time, the condensed water is stored in the tank 80.

The intake air separated from the condensed water flows into the upstream end 70a of the downstream pipe 70 and is supplied to the engine 1.

Since the upstream end 70a of the downstream pipe 70 is disposed in the tank 80 and separated from the inner wall surfaces 81a to 84a including the colliding surface 82a, the condensed water separator 50 can prevent the colliding condensed water from flowing in the downstream pipe 70 by flowing along the inner wall surfaces 81a to 84a of the tank 80 having the colliding surface 82a. The separator can also prevent the condensed water bounced or splashed due to the collision with the colliding surface 82a from flowing in the downstream pipe 70.

For example, in such a structure that intake air collides with the surface of condensed water stored in the tank, the atomization or vaporization of the stored condensed water is promoted, and some of the stored condensed water or its vapor may be mixed with the intake air again. This may cause some of the condensed water to flow through the downstream pipe into the combustion chamber of the engine. In contrast, the condensed water separator 50 in this embodiment includes the tank 80 having the colliding surface 82a with which the intake air flowing out from the downstream end 60b of the upstream pipe 60 collides and can thus prevent the stored condensed water from being atomized or vaporized and flowing in the downstream pipe 70 and the combustion chamber 1c of the engine 1 downstream of the downstream pipe.

This configuration can reliably separate the condensed water from the intake air and thus prevent the condensed water from flowing in the engine 1. It can also improve the durability and output of the engine 1.

Since the upstream end 70a of the downstream pipe 70 is disposed more distant from the colliding surface 82a than the downstream end 60b of the upstream pipe 60, the intake air flows from the downstream end 60b of the upstream pipe 60 to the upstream end 70a of the downstream pipe 70 in a meandering manner, which more reliably separates the condensed water from the intake air. For example, the intake air flowing out from the downstream end 60b of the upstream pipe 60 collides with the colliding surface 82a and thus flows reversely and then toward the upstream end 70a of the downstream pipe 70, which more reliably separates the condensed water having mass greater than the intake air from the intake air. Consequently, the separator can further prevent the condensed water from flowing in the downstream pipe 70.

Since the downstream end 60b of the upstream pipe 60 is disposed closer to the colliding surface 82a than the upstream end 70a of the downstream pipe 70, the intake air containing the condensed water efficiently (strongly) collides with the colliding surface 82a. This can efficiently separate the condensed water from the intake air.

Since the downstream end 60b of the upstream pipe 60 is disposed closer to the colliding surface 82a than the upstream end 70a of the downstream pipe 70, the separator can further prevent the condensed water bounced or splashed due to the collision with the colliding surface 82a from flowing in the downstream pipe 70.

In specific, the upstream pipe 60 and the downstream pipe 70 overlap vertically with each other when viewed from the direction perpendicular to the direction of the extending downstream end 60b of the upstream pipe 60, and the upstream end 70a of the downstream pipe 70 is separated from the colliding surface 82a and the downstream end 60b of the upstream pipe 60 from which the condensed water flows out. This configuration can more reliably prevent the condensed water from flowing in the downstream pipe 70.

The condensed water flowing out from the downstream end 60b of the upstream pipe 60 collides with the colliding surface 82a and then flows down, or drops down from the downstream end 60b of the upstream pipe 60 by gravity. Since the upstream end 70a of the downstream pipe 70 is disposed above the downstream end 60b of the upstream pipe 60, the separator can further prevent the condensed water from flowing in the downstream pipe 70. This can more reliably separate the condensed water from the intake air.

Since the colliding surface 82a is disposed perpendicular to the direction of the intake air flowing out from the downstream end 60b of the upstream pipe 60, the intake air containing the condensed water efficiently (strongly) collides with the colliding surface 82a. This can more reliably separate the condensed water from the intake air.

The vertically disposed inner wall surfaces 81a, 83a, and 84a and colliding surface 82a of the tank 80 can promptly drop down the condensed water along these surfaces 81a, 82a, 83a, and 84a. This can reliably capture the condensed water.

The condensed water separator 50 disposed at the lowest section 10a vertically lowest in the intake path 10 can efficiently capture the condensed water.

### [Modifications]

While an embodiment of the present invention has been described, the embodiment should not be construed to limit the condensed water separator of the present invention. The embodiment may be modified in various ways without departing from the scope of the present invention.

Six example modifications of the condensed water separator will now be described. The configurations of the modifications other than matters described below as differences are the same as those of the above-described embodiment, and the same components have the same reference numerals or symbols.

### [First Modification]

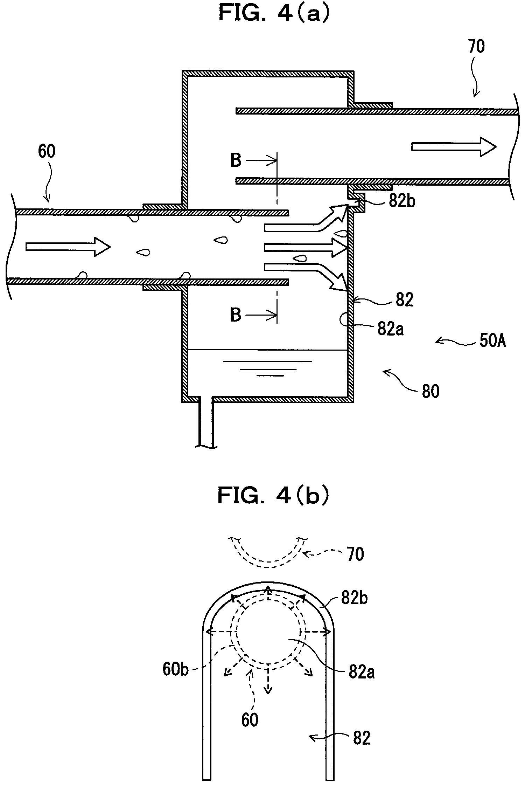

With reference to FIG. 4 (a), a condensed water separator 50A in accordance with a first modification includes a guide 82b that is disposed on the colliding surface 82a of the second wall 82 in the condensed water separator 50 in the above-described embodiment and that guides the condensed water downward.

With reference to FIG. 4(b), the guide 82b is disposed outside an inner diameter of the upstream pipe 60 (illustrated by the dashed line) when viewed from the axial direction of the upstream pipe 60. That is, the guide 82b is disposed outside the area corresponding to the opening defined by the downstream end 60b (illustrated by the dashed line) of the upstream pipe 60 and projected on the colliding surface 82a. The guide 82b is provided continuously on the colliding surface 82a. In specific, the guide 82b is provided continuously so as to cover the upper and side portions of the inner diameter of the upstream pipe 60 when viewed from the axial direction of the upstream pipe. In this modification, the guide 82b has an inverted U shape.

With reference to FIGs. 4(a) and 4(b), the guide 82b has a cross section recessed in the second wall 82 from the inside toward the outside of the tank 80. In other words, the guide 82b is a groove provided in the colliding surface 82a.

The condensed water separator 50A having the configuration in accordance with the first modification has the following advantageous effects in addition to the advantageous effects of the above-described embodiment.

The condensed water colliding with the colliding surface 82a spatters in all directions on the colliding surface 82a as illustrated by the dashed arrows in FIG. 4(b). The condensed water spattering upward and laterally is trapped in the groove guide 82b. The trapped condensed water flows down in the groove of the guide 82b. This reduces the spattering range of the condensed water colliding with the colliding surface 82a and allows the condensed water to smoothly flow down. Thus, the condensed water can be promptly stored in the tank 80.

Since the condensed water smoothly flows down, the separator can prevent the condensed water adhering to the colliding surface 82a from being blown up. This modification can prevent the condensed water from flowing in the downstream pipe 70.

The guide 82b in the first modification has an inverted U shape. Alternatively, the guide 82b may have any shape that continuously covers the upper and side portions of the inner diameter of the upstream pipe 60. For example, the guide 82b may have an inverted cornered-U shape or a semicircular shape protruding upward.

The guide 82b may be of any type, for example, a rib protruding on the colliding surface 82a from the exterior to the interior of the tank 80. For example, the guide 82b may be formed by adding a rib on the colliding surface 82a toward the interior of the tank 80 or by providing a protrusion on the second wall 82 from the exterior to the interior of the tank 80. In this case, the guide 82b prevents the condensed water spattering in all directions on the colliding surface 82a from spattering and guides the condensed water to flow down. This reduces the spattering range of the condensed water colliding with the colliding surface 82a and allows the condensed water to smoothly flow down, resulting in a prompt storage of the condensed water in the tank 80.

### [Second Modification]

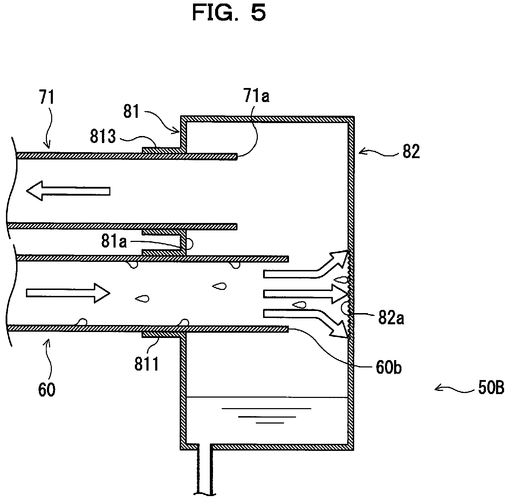

With reference to FIG. 5, a condensed water separator 50B in accordance with a second modification has a second wall 82 having a colliding surface 82a that is formed to reduce bounced condensed water, which is different from the condensed water separator 50 in the above-described embodiment, and a downstream pipe 71 disposed at a position different from that in the above-described embodiment.

The colliding surface 82a has higher affinity to the condensed water than a smooth surface. In this modification, the colliding surface 82a has a higher coefficient of friction than a smooth surface. That is, the colliding surface 82a is rougher than a smooth surface.

For example, the smooth surface has a contact angle of 90° or more to the adhering condensed water. In contrast, the rough surface has a contact angle of less than 90° to the adhering condensed water. That is, the rough surface has higher wettability than the smooth surface. In other words, the rough surface has higher affinity to the condensed water than the smooth surface.

The colliding surface 82a can be formed by a known process, such as blasting and embossing.

The downstream pipe 71 is connected with the first wall 81 of the tank 80. The first wall 81 is provided with a third cylindrical protrusion 813 in addition to the first cylindrical protrusion 811. The downstream pipe 71 is fit inside the third protrusion 813, and the upstream pipe 60 inside the first protrusion 811. The third protrusion 813 defines an opening having an inner diameter slightly larger than the outer diameter of the downstream pipe 71, and the downstream pipe 71 is inserted into and fixed to the opening. The second wall 82 is not connected with the upstream pipe 60 or the downstream pipe 71.

The upstream end 71a of the downstream pipe 71 is separated from the first inner wall surface 81a of the first wall 81 and the colliding surface 82a of the second wall 82 in the tank 80. That is, the upstream end 71a of the downstream pipe 71 protrudes from the first inner wall surface 81a toward the colliding surface 82a so as to face the colliding surface 82a. In other words, the upstream end 71a of the downstream pipe 71 is disposed between the first inner wall surface 81a and the colliding surface 82a.

In this modification, the upstream end 71a of the downstream pipe 71 is disposed more distant from the colliding surface 82a than the downstream end 60b of the upstream pipe 60, and the downstream end 60b of the upstream pipe 60 is disposed closer to the colliding surface 82a than the upstream end 71a of the downstream pipe 71. The upstream end 71a of the downstream pipe 71 is disposed above the downstream end 60b of the upstream pipe 60. The upstream pipe 60 and the downstream pipe 71 are paralleled vertically in a lateral view as shown in FIG. 5.

The downstream pipe 71 extends through the first inner wall surface 81a of the first wall 81 connected with the upstream pipe 60 in the tank 80. In other words, the downstream pipe 71 is disposed so as to penetrate through the first inner wall surface 81a facing the colliding surface 82a in the tank 80.

The condensed water separator 50B having such a configuration in accordance with the second modification has the following advantageous effects in addition to the advantageous effects of the above-described embodiment.

The colliding surface 82a formed to reduce bounced condensed water promotes the adhesion of the condensed water contained in the intake air flowing from the upstream pipe 60 to the colliding surface 82a. This adhesion further prevents the condensed water from flowing in the downstream pipe 71.

In specific, the colliding surface 82a having higher affinity to the condensed water than a smooth surface causes the condensed water to adhere to the colliding surface 82a at a contact angle smaller than to the smooth surface. That is, the condensed water wets and expands on the colliding surface 82a and flows down. This prevents the condensed water from being blown up from the colliding surface 82a. This configuration can prevent the condensed water from flowing in the downstream pipe 71.

The downstream pipe 71, which extends through the first inner wall surface 81a instead of the colliding surface 82a in the tank 80, allows the colliding surface 82a to have a sufficient area.

The downstream pipe 71, which extends through the first inner wall surface 81a of the first wall 81 connected with the upstream pipe 60 in the tank 80, reverses the direction of the intake air flowing from the upstream pipe 60 into the tank 80 to the direction of the intake air flowing out from the tank 80 through the downstream pipe 71. In essence, the intake air turns around in the tank 80. For example, this configuration can be applied to such a layout of the tank 80 having no extra space in its vicinity in a top view.

The colliding surface 82a may have a nonwoven fabric or sponge sheet affixed thereto, instead of the rough surface, to enhance the affinity to the condensed water compared to a smooth surface so as to reduce bounced condensed water. In this case, the same advantageous effects as the rough colliding surface 82a can be achieved only by affixing a nonwoven fabric or sponge sheet to the tank 80 without machining the tank 80 in the above-described embodiment.

### [Third Modification]

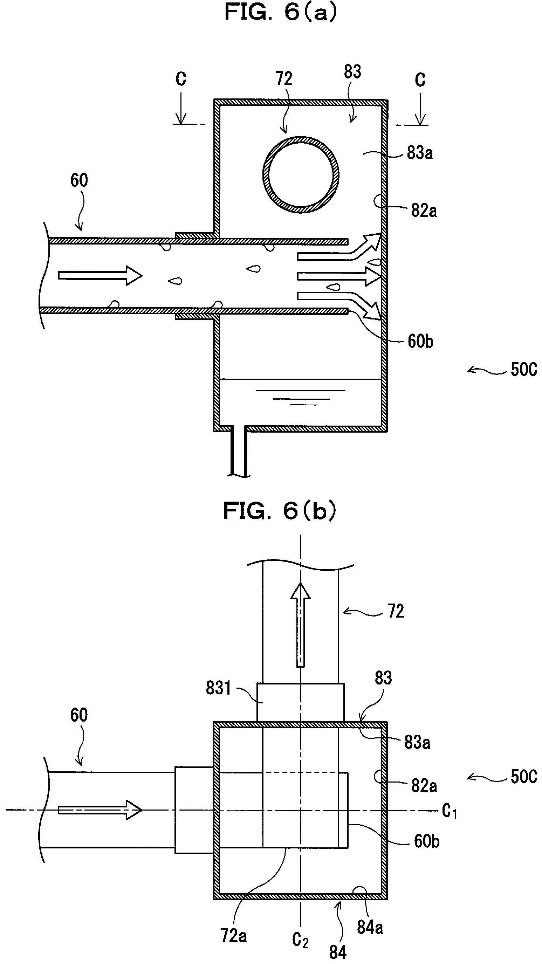

With reference to FIGs. 6(a) and 6(b), a condensed water separator 50C in accordance with a third modification has a downstream pipe 72 at a position different from that in the condensed water separator 50 in the above-described embodiment.

The downstream pipe 72 of the condensed water separator 50B is connected to the third wall 83 of the tank 80. With reference to FIG. 6(b), the third wall 83 is provided with a fourth cylindrical protrusion 831, and the downstream pipe 72 is fit inside the fourth protrusion 831. The fourth protrusion 831 defines an opening having an inner diameter slightly larger than the outer diameter of the downstream pipe 72, and the downstream pipe 72 is inserted into and fixed to the opening. That is, the downstream pipe 72 extends through the third inner wall surface 83a instead of the colliding surface 82a in the tank 80. The second wall 82 is not connected with the upstream pipe 60 or the downstream pipe 72.

The condensed water separator 50C in this modification is provided with the upstream pipe 60 having an axis C₁ intersecting the axis C₂ of the downstream pipe 72 in a top view. This indicates that the pipes 60 and 72 extend in mutually different directions in the tank 80. In the FIG. 6(b), the axis C₁ is orthogonal to the axis C₂.

The upstream end 72a of the downstream pipe 72 is separated from the third inner wall surface 83a of the third wall 83 and the fourth inner wall surface 84a of the fourth wall 84 in the tank 80. The upstream end 72a is also separated from the colliding surface 82a of the second wall 82. That is, the upstream end 72a of the downstream pipe 72 protrudes from the third inner wall surface 83a toward the fourth inner wall surface 84a so as to face the fourth inner wall surface 84a. In other words, the upstream end 72a of the downstream pipe 72 is disposed between the third inner wall surface 83a and the fourth inner wall surface 84a.

In this modification, the upstream end 72a of the downstream pipe 72 is disposed more distant from the colliding surface 82a than the downstream end 60b of the upstream pipe 60. In other words, the downstream end 60b of the upstream pipe 60 is disposed closer to the colliding surface 82a than the upstream end 72a of the downstream pipe 72. The upstream end 72a of the downstream pipe 72 is disposed above the downstream end 60b of the upstream pipe 60 as shown in FIG. 6(a). The upstream side of the downstream end 60b of the upstream pipe 60 and the upstream end 72a and its downstream side of the downstream pipe 72 overlap vertically with each other in a lateral view as shown in FIGs. 6(a) and 6(b).

The condensed water separator 50C having the configuration in accordance with the third modification has the following advantageous effects in addition to the advantageous effects of the above-described embodiment.

The downstream pipe 72, which extends through the third inner wall surface 83a instead of the colliding surface 82a in the tank 80, allows the colliding surface 82a to have a sufficient area.

Since the axis C₁ of the upstream pipe 60 intersects the axis C₂ of the downstream pipe 72 in a top view, the upstream pipe 60 and the downstream pipe 72 extend in mutually different directions at the intersection. This configuration enables various layouts of the intake system.

The downstream pipe 72 may be disposed so as to extend through the fourth inner wall surface 84a instead of the colliding surface 82a in the tank 80. This configuration can also achieve the same advantageous effects as the condensed water separator 50C in this modification.

### [Fourth Modification]

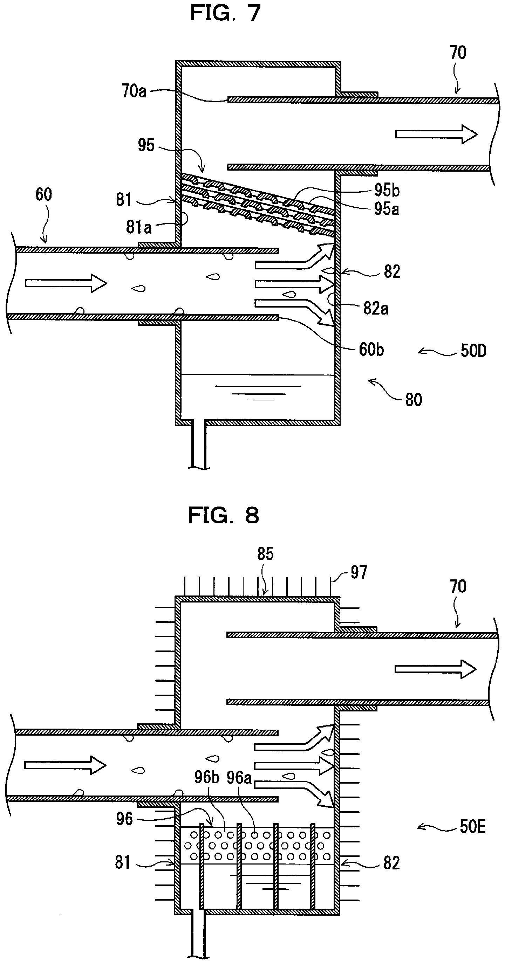

With reference to FIG. 7, a condensed water separator 50D in accordance with a fourth modification additionally includes perforated plates (filters) 95 disposed above the downstream end 60b of the upstream pipe 60 and below the upstream end 70a of the downstream pipe 70 in the condensed water separator 50 in the above-described embodiment. The separator having three perforated plates 95 (Only one of them has a reference numeral in the drawing.) is exemplified in FIG. 7.

The perforated plates 95 capture the condensed water contained in the flowing intake air. Thus, the perforated plates 95 function as filters for separating the condensed water from the flowing intake air.

Each perforated plate 95 has a large number of holes 95a (Only one of them has a reference character in the drawing.) passing through a plate. That is, the perforated plate 95 has the holes 95a and a board portion 95b through which the holes extend. The perforated plate may be a perforated metal.

The perforated plates 95 are inclined downward from the first inner wall surface 81a of the first wall 81 to the colliding surface 82a of the second wall 82. The perforated plates 95 are disposed such that burrs generated in the formation of the holes 95a face downward. In other words, the burrs protrude downward around the holes 95a on the bottom surfaces of the perforated plates 95.

The perforated plates 95 are preferably disposed such that the holes 95a in one of the perforated plates 95 are at positions different from the holes 95a of the other perforated plates 95 in a top view. In other words, the board portion 95b is preferably disposed above the holes 95a of the underlying perforated plate 95.

The condensed water separator 50D having the configuration in accordance with the fourth modification has the following advantageous effects in addition to the advantageous effects of the above-described embodiment.

If the stored condensed water or the condensed water flowing along the colliding surface 82a is blown up, or if the condensed water is bounced off the colliding surface 82a, the intake air mixed with such condensed water flows through the holes 95a of the perforated plates 95 toward the upstream end 70a of the downstream pipe 70. The intake air collides with the flat portions 95b of the perforated plates 95 at this time. This collision causes the condensed water to adhere to the flat portions 95b. The perforated plates 95 inclined downward to the colliding surface 82a allow the condensed water to flow along the flat portions 95b and down along the colliding surface 82a or to drop down from the burrs generated around the holes 95a. The condensed water is separated from the intake air flowing through the perforated plates 95 in this way. This configuration more reliably separates the condensed water from the intake air.

The number of the perforated plates functioning as gas-liquid filters 95 may be any figure other than three, for example, one, two, or four or more. A smaller number of the perforated plates reduce an increase in resistance of the intake air but decrease the efficiency in capture of the condensed water. The number of the perforated plates is preferably determined in consideration of both the increase in the resistance of the intake air and the efficiency in capture of the condensed water.

### [Fifth Modification]

With reference to FIG. 8, a condensed water separator 50E in accordance with a fifth modification additionally includes perforated plates (flow restrictors) 96 and cooling fins 97 in the condensed water separator 50 in the above-described embodiment.

The perforated plates 96 restrict the flow of the condensed water stored in the tank 80. In specific, the perforated plates 96 restrict the wobbling on the surface of the condensed water stored in the tank 80. The perforated plates 96 each have a large number of holes 96a (Only one of them has a reference character in the drawing.) passing through the plate. For example, the perforated plate may be a perforated metal.

In this modification, a lattice of perforated plates 96 (Only one of them has a reference numeral in the drawing.) protrudes from the inner wall of the tank 80 so as to be immersed in the condensed water stored in the tank 80. In specific, each perforated plate 96 has a vertical length longer than the predetermined level in the above-described embodiment and stands on the bottom surface 86 of the tank 80. That is, the perforated plate 96 has its upper portion 96b positioned above the surface of the condensed water. The lattice of the perforated plates 96 may have a tetragonal, triangular, hexagonal, or any other pattern.

The fins 97 protrude from the tank 80 to ensure a high heat transfer area that improves the efficiency of heat exchange. The fins 97 are provided on the outer walls of the tank 80. That is, the fins 97 protrude from the outside of the tank 80 to expand the heat transfer area (surface area) of the outside of the tank 80 and thus improve the efficiency of heat exchange between the condensed water stored in the tank 80 and outside air. The fins 97 promote the cooling of the tank 80 and its interior.

The fins 97 provided on the first wall 81, the second wall 82, and the top surface 85 of the tank 80 are exemplified in FIG. 8. Alternatively, the fins 97 may be disposed on the third wall 83 and the fourth wall 84 (See FIG. 3 for both walls), and the bottom surface 86 of the tank 80.

The condensed water separator 50E having the configuration in accordance with the fifth modification has the following advantageous effects in addition to the advantageous effects of the above-described embodiment.

The perforated plates 96 protruding toward the interior of the tank 80 and immersed in the condensed water can restrict the wobbling on the surface of the condensed water stored in the tank 80 and can prevent the condensed water from being bounced due to the wobbling on the surface of the condensed water. This can prevent the condensed water from flowing in the downstream pipe 70. It also reduces the sound generated by the flowing condensed water and improves the detection accuracy of the float switch 89 (See FIGs. 1 and 2).

The perforated plates 96 having the upper portions 96b positioned above the surface of the condensed water restrict the flow of the intake air in the vicinity of the surface of the condensed water stored in the tank 80. This prevents the condensed water from being blown up.

The fins 97 disposed on the outer walls of the tank 80 improve the efficiency in heat exchange between the condensed water stored in the tank 80 and outside air and thus prevent the condensed water from being vaporized again. This prevents the condensed water from flowing in the downstream pipe 70. Cooling the intake air in the tank 80 improves the efficiency in capture of the condensed water. The condensed water is more reliably separated from the intake air in this way.

### [Sixth Modification]

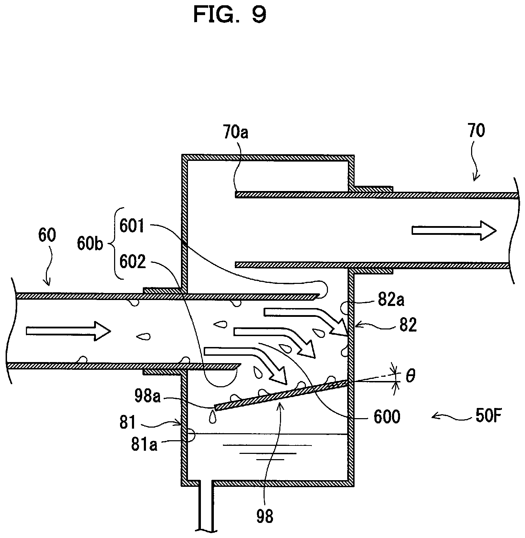

With reference to FIG. 9, a condensed water separator 50F in accordance with a sixth modification has a downstream end 60b of an upstream pipe 60 having a different shape from that in the condensed water separator 50 in the above-described embodiment, and additionally includes a baffle plate (flow restrictor) 98.

The upstream pipe 60 of the condensed water separator 50F has its downstream end 60b defining an opening 600 inclined downward. In other words, the lower portion 602 of the downstream end 60b is disposed closer to the intercooler 13 (See FIG. 1) than the upper portion 601. That is, the intake air flows out from the opening 600 so as to further move away from the upstream end 70a of the downstream pipe 70 in comparison with the intake air flowing out from the opening defined by the downstream end 60b of the upstream pipe 60 in the condensed water separator 50 in the above-described embodiment.

The baffle plate 98, which is also called a deflector, restricts the flow of the condensed water stored in the tank 80. The baffle plate 98 protrudes inwardly from the tank 80. In specific, the baffle plate 98 protrudes below the downstream end 60b of the upstream pipe 60 and from the colliding surface 82a of the second wall 82 toward the interior of the tank 80. The baffle plate 98 is inclined downward from the colliding surface 82a. In other words, the baffle plate 98 is inclined downward toward the first inner wall surface 81a of the first wall 81.

The tip 98a of the baffle plate 98 is disposed above the predetermined level in the above-described embodiment. That is, the baffle plate 98 is disposed above the surface of the condensed water stored in the tank 80. The tip 98a of the baffle plate 98 is separated from the first inner wall surface 81a.

The baffle plate 98 is disposed at a tilt angle θ to the horizontal plane when the vehicle stops. The tilt angle θ, which is experimentally or empirically determined, indicates an angle greater than the upper limit of angles corresponding to possible attitudes of the vehicle during normal travel (an angle for significant inclination). That is, the tilt angle θ is determined such that the baffle plate 98 is not horizontal regardless of the attitude of the vehicle. For example, if the baffle plate 98 is inclined downward from the front side to the rear side of the vehicle, the tilt angle θ is determined to be larger than angles corresponding to possible attitudes of the vehicle inclined forward (pitching) during normal travel (angles of pitch). If the baffle plate 98 is inclined downward in the lateral direction of the vehicle, the tilt angle θ is determined to be larger than angles corresponding to possible attitudes of the vehicle inclined laterally (rolling) during normal travel (angles of roll). That is, the baffle plate 98 is inclined downward from the colliding surface 82a as long as the vehicle is in an attitude that can be taken during normal travel.

The condensed water separator 50F having the configuration in accordance with the sixth modification has the following advantageous effects in addition to the advantageous effects of the above-described embodiment.

Since the opening 600 defined by the downstream end 60b of the upstream pipe 60 is inclined downward, the intake air flows out downward. The baffle plate 98 disposed below the downstream end 60b of the upstream pipe 60 and above the stored condensed water and from the colliding surface 82a toward the interior of the tank 80 allows the intake air to collide with the colliding surface 82a and the baffle plate 98. This collision causes the condensed water to adhere to the colliding surface 82a and the baffle plate 98. That is, part of the top surface of the baffle plate 98 is a colliding surface with which the intake air flowing out from the downstream end 60b of the upstream pipe 60 collides . The condensed water flows down along the colliding surface 82a and the baffle plate 98 and is then stored in the tank 80. The condensed water is reliably separated from the intake air in this way.

For example, if the intake air colliding with the top surface of the baffle plate 98 moves toward the colliding surface 82a of the second wall 82, the intake air moves the condensed water adhering to the top surface of the baffle plate 98, such that the condensed water contacts the condensed water flowing down along the colliding surface 82a. This indicates that the condensed water increases its droplet size and weight at the connection between the colliding surface 82a and the baffle plate 98. The baffle plate 98 inclined downward from the second wall 82 causes the condensed water having an increased droplet size and weight to flow down along the baffle plate 98 by gravity and then to be stored in the tank 80. The condensed water is reliably separated from the intake air in this way.

In specific, since the baffle plate 98 is disposed at the tilt angle θ greater than the upper limit of angles corresponding to possible attitudes of the vehicle during normal travel, the condensed water can be always guided by gravity as long as the vehicle is in an attitude that can be taken during normal travel. Consequently, the condensed water on the baffle plate 98 can flow down regardless of the traveling state of the vehicle. This configuration further prevents the condensed water from flowing in the downstream pipe 70.

The baffle plate 98 disposed above the surface of the condensed water stored in the tank 80 causes the vaporized condensed water to be condensed again and then drop down. The baffle plate stops the bounced condensed water stored in the tank 80.

### [Other items]

While the embodiment of the present invention has been described, the embodiment should not be construed to limit the present invention and may be modified in various ways without departing from the scope of the present invention. The configurations according to the embodiment and modifications may be selected and/or be combined appropriately.

The tank 80 may have any shape other than a cuboid, for example, and it may be polygonally columnar or cylindrical.

The upstream end 70a of the downstream pipe 70 may be disposed, for example, closer to the colliding surface 82a than the downstream end 60b of the upstream pipe 60, instead of being disposed more distant from the colliding surface 82a than the downstream end 60b of the upstream pipe 60, as long as the upstream end 70a is separated from the colliding surface 82a.

The upstream end 70a of the downstream pipe 70 may be disposed at the same height as or below the downstream end 60b of the upstream pipe 60, instead of being disposed above the downstream end 60b of the upstream pipe 60. This configuration allows the downstream pipe 70 to connect with the tank 80 at positions different from that in the above-described embodiment and thus enables various layouts.

While the colliding surface 82a is disposed vertically and perpendicularly to the direction of the flowing-out intake air in the above-described embodiment, the colliding surface 82a only requires such a structure that the intake air collides with the colliding surface. For example, the colliding surface 82a may be inclined from the vertical plane. In this case, the tank 80 can have various shapes. The upstream pipe 60 can be oriented in various directions relative to the tank 80. This enables various layouts.

While the intake system includes the turbocharger 30 in the above-described embodiment, the intake system may include a supercharger for supercharge with the output revolution of the engine 1 instead of or in addition to the turbocharger 30.

The condensed water separator 50 may be disposed at any position downstream of the intercooler 13 and upstream of the intake manifold 14 instead of at the lowest section 10a.

The condensed water separator 50 may be disposed downstream of the EGR cooler 42. For example, the condensed water separator 50 may be disposed between the EGR cooler 42 and the EGR valve 43 or between the EGR valve 43 and the downstream end 40b of the EGR system. In this case, the condensed water is reliably separated from the recirculated exhaust.

While the perforated plates 96 and the baffle plate 98 exemplify the flow restrictor for restricting the flow of the condensed water stored in the tank 80 in the modifications of the above-described embodiment, the flow restrictor may be a porous member instead of or in addition to the perforated plates or the baffle plate. Examples of the porous member include a sponge and activated carbon. That is, a sponge or activated carbon may be disposed in the tank 80. In this case, the porous member absorbs the condensed water flowing into the tank 80. This restricts the flow of the condensed water and prevents the condensed water from being bounced. Consequently, the condensed water is more reliably separated from the intake air. Activated carbon used as the porous member can also purify the condensed water.

### REFERENCE SIGNS LIST

1 engine (internal combustion engine)
10 intake path
10a lowest section
20 exhaust path
30 turbocharger (supercharger)
40 EGR system
42 EGR cooler (cooler)
50, 50A, 50B, 50C, 50D, 50E, 50F condensed water separator
60 upstream pipe
60a upstream end
60b downstream end
600 opening
601 upper portion
602 lower portion
70, 71, 72 downstream pipe
70a, 71a, 72a upstream end
70b downstream end
80 tank
81 first wall
81a first inner wall surface
82 second wall
82a colliding surface (second inner wall surface)
82b guide
83 third wall
83a third inner wall surface
84 fourth wall
84a fourth inner wall surface
87 drain outlet
89 float switch
90 condensed water path
91 condensed water pipe
92 switching valve
95 perforated plate (filter)
96 perforated plate (flow restrictor)
97 fin
98 baffle plate (flow restrictor)
100 controller
θ tilt angle of baffle plate 98
C₁ axis of upstream pipe 60
C₂ axis of downstream pipe 72
L₀ inner dimension between first inner wall surface 81a and colliding surface 82a
L₁ length of upstream pipe 60
L₂ length of downstream pipe 70

## Claims

1. A condensed water separator (50) that is configured to be disposed downstream of a cooler (13) cooling intake air or exhaust of an engine (1) and to separate condensed water generated by condensation of part of the intake air or exhaust from the intake air or exhaust, the condensed water separator (50) comprising:
a tank (80) storing the condensed water;
an upstream pipe (60) in communication with the tank (80), and suitable to be in communication with the cooler to define a flow path of the intake air or exhaust from the cooler (13) to the tank (80); and
a downstream pipe (70) defining a flow path of the intake air or exhaust downstream of the tank (80),
wherein the tank (80) has an inner wall surface (81a, 82a, 83a, 84a) including a colliding surface (82a) with which the intake air or exhaust flowing out from a downstream end (60b) of the upstream pipe (60) collides,
the downstream pipe (70) has an upstream end (70a),
the upstream end (70a) of the downstream pipe (70) is disposed inside the tank (80), and
the upstream pipe (60) and the downstream pipe (70) overlap with each other when viewed from the direction perpendicular to the extending direction of the downstream end (60b) of the upstream pipe (60),
**characterized in that**
the upstream end (70a) is separated from the inner wall surface (81a, 82a, 83a, 84a) of the tank (80), and the downstream end (60b) of the upstream pipe (60) is disposed inside the tank (80) and separated from the colliding surface (82a) of the tank (80).

2. The condensed water separator (50) according to Claim 1, wherein the downstream end (60b) of the upstream pipe (60) protrudes from the inner wall surface (81a) toward the colliding surface (82a) so as to face the colliding surface (82a), and
the downstream end (60b) of the upstream pipe (60) is disposed closer to the colliding surface (82a) than the upstream end (70a) of the downstream pipe (70).

3. The condensed water separator (50) according to Claim 1 or 2, wherein the upstream end (70a) of the downstream pipe (70) is disposed above the downstream end (60b) of the upstream pipe (60).

4. The condensed water separator (50) according to one of Claims 1 to 3, further comprising a strainer (95) disposed between the downstream end (60b) of the upstream pipe (60) and the upstream end (70a) of the downstream pipe (70) in the tank (80), the strainer (95) separating the condensed water from the flowing intake air or exhaust.

5. The condensed water separator (50) according to one of Claims 1 to 4, wherein the colliding surface (82a) is disposed vertically.

6. The condensed water separator (50) according to one of Claims 1 to 5, wherein the colliding surface (82a) has a guide (82b) that is disposed outside the upstream pipe (60) when viewed from the axial direction of the upstream pipe (60) and that guides the condensed water, and
the guide 82b is a groove provided on the colliding surface 82a.

7. The condensed water separator (50) according to one of Claims 1 to 6, wherein the colliding surface (82a) has higher affinity to the condensed water than affinity to the condensed water of a smooth surface.

8. The condensed water separator (50) according to one of Claims 1 to 7, wherein the tank (80) has an outer wall provided with fins (97).

9. The condensed water separator (50) according to one of Claims 1 to 8, further comprising a flow restrictor (96, 98) inwardly protruding from the tank (80).

## Patentansprüche

1. Kondenswasserabscheider (50), der konfiguriert ist, ablaufseitig von einem Kühler (13) angeordnet zu werden, der Ansaugluft oder Abgase eines Motors (1) kühlt, und Kondenswasser abzuscheiden, das durch Kondensation eines Teils der Ansaugluft oder der Abgase erzeugt wird, von der Ansaugluft oder den Abgasen abzuscheiden, wobei der Kondenswasserabscheider (50) aufweist:
einen Tank (80), der das Kondenswasser speichert;
eine zulaufseitige Leitung (60), die mit dem Tank (80) in Verbindung steht und geeignet ist, mit dem Kühler in Verbindung zu stehen, um einen Durchflussweg der Ansaugluft oder der Abgase vom Kühler (13) zum Tank (80) zu definieren; und
eine ablaufseitige Leitung (70), die einen Durchflussweg der Ansaugluft oder der Abgase ablaufseitig vom Tank (80) definiert,
wobei der Tank (80) eine Innenwandfläche (81a, 82a, 83a, 84a) aufweist, die eine Aufprallfläche (82a) aufweist, auf die die Ansaugluft oder die Abgase aufprallen, die aus einem ablaufseitigen Ende (60b) der zulaufseitigen Leitung (60) ausströmen,
die ablaufseitige Leitung (70) ein zulaufseitiges Ende (70a) aufweist,
das zulaufseitige Ende (70a) der ablaufseitigen Leitung (70) innerhalb des Tanks (80) angeordnet ist, und
die zulaufseitige Leitung (60) und die ablaufseitige Leitung (70) miteinander überlappen, wenn sie aus der zur Ausdehnungsrichtung des ablaufseitigen Endes (60b) der zulaufseitigen Leitung (60) senkrechten Richtung betrachtet werden,
**dadurch gekennzeichnet, dass**
das zulaufseitige Ende (70a) von der Innenwandfläche (81a, 82a, 83a, 84a) des Tanks (80) getrennt ist, und das ablaufseitige Ende (60b) der zulaufseitigen Leitung (60) innerhalb des Tanks (80) angeordnet ist und von der Aufprallfläche (82a) des Tanks (80) getrennt ist.

2. Kondenswasserabscheider (50) nach Anspruch 1, wobei das ablaufseitige Ende (60b) der zulaufseitigen Leitung (60) von der Innenwandfläche (81a) zur Aufprallfläche (82a) vorsteht, so dass es zur Aufprallfläche (82a) weist, und
das ablaufseitige Ende (60b) der zulaufseitigen Leitung (60) näher zur Aufprallfläche (82a) angeordnet ist als das zulaufseitige Ende (70a) der ablaufseitigen Leitung (70).

3. Kondenswasserabscheider (50) nach Anspruch 1 oder 2, wobei das zulaufseitige Ende (70a) der ablaufseitigen Leitung (70) über dem ablaufseitigen Ende (60b) der zulaufseitigen Leitung (60) angeordnet ist.

4. Kondenswasserabscheider (50) nach einem der Ansprüche 1 bis 3, der ferner ein Sieb (95) aufweist, das zwischen dem ablaufseitigen Ende (60b) der zulaufseitigen Leitung (60) und dem zulaufseitigen Ende (70a) der ablaufseitigen Leitung (70) im Tank (80) angeordnet ist, wobei das Sieb (95) das Kondenswasser von der strömenden Ansaugluft oder den Abgasen trennt.

5. Kondenswasserabscheider (50) nach einem der Ansprüche 1 bis 4, wobei die Aufprallfläche (82a) vertikal angeordnet ist.

6. Kondenswasserabscheider (50) nach einem der Ansprüche 1 bis 5, wobei die Aufprallfläche (82a) eine Führung (82b) aufweist, die außerhalb der zulaufseitigen Leitung (60) angeordnet ist, wenn sie aus der Achsenrichtung der zulaufseitigen Leitung (60) betrachtet wird, und die das Kondenswasser führt, und
die Führung (82b) eine Nut ist, die an der Aufprallfläche (82a) bereitgestellt ist.

7. Kondenswasserabscheider (50) nach einem der Ansprüche 1 bis 6, wobei die Aufprallfläche (82a) eine höhere Affinität zum Kondenswasser als eine Affinität zum Kondenswasser einer glatten Oberfläche aufweist.

8. Kondenswasserabscheider (50) nach einem der Ansprüche 1 bis 7, wobei der Tank (80) eine Außenwand aufweist, die mit Rippen (97) versehen ist.

9. Kondenswasserabscheider (50) nach einem der Ansprüche 1 bis 8, der ferner einen Durchflussbegrenzer (96, 98) aufweist, der vom Tank (80) nach innen vorsteht.

## Revendications

1. Séparateur d'eau de condensation (50), destiné à être disposé en aval d'un refroidisseur (13) refroidissant l'air d'admission ou d'échappement d'un moteur (1) et pour séparer l'eau de condensation générée par condensation d'une partie de l'air d'admission ou d'évacuation, ledit séparateur d'eau de condensation (50) comprenant :
un réservoir (80) stockant l'eau de condensation ;
une conduite amont (60) en communication avec le réservoir (80), et adaptée pour être en communication avec le refroidisseur afin de définir un trajet d'écoulement de l'air d'admission ou d'évacuation du refroidisseur (13) au réservoir (80) ; et
une conduite aval (70) définissant un trajet d'écoulement de l'air d'admission ou d'évacuation en aval du réservoir (80),
où le réservoir (80) a une surface de paroi intérieure (81a, 82a, 83a, 84a) comprenant une surface de collision (82a) contre laquelle bute l'air d'admission ou d'évacuation sortant d'une extrémité aval (60b) de la conduite amont (60),
la conduite aval (70) a une extrémité amont (70a),
l'extrémité amont (70a) de la conduite aval (70) est disposée à l'intérieur du réservoir (80), et
la conduite amont (60) et la conduite aval (70) se chevauchent l'une l'autre, vues dans la direction perpendiculaire à la direction d'extension de l'extrémité aval (60b) de la conduite amont (60)
**caractérisé en ce que**
l'extrémité aval (70a) est séparée de la surface de paroi intérieure (81a, 82a, 83a, 84a) du réservoir (80),
et
l'extrémité amont (60b) de la conduite amont (60) est disposée à l'intérieur du réservoir (80) et séparée de la surface de collision (82a) du réservoir (80).

2. Séparateur d'eau de condensation (50) selon la revendication 1, où l'extrémité aval (60b) de la conduite amont (60) fait saillie de la surface de paroi intérieure (81a) vers la surface de collision (82a) de manière à être opposée à la surface de collision (82a), et l'extrémité aval (60b) de la conduite amont (60) est plus proche de la surface de collision (82a) que l'extrémité amont (70a) de la conduite aval (70).

3. Séparateur d'eau de condensation (50) selon la revendication 1 ou la revendication 2, où l'extrémité amont (70a) de la conduite aval (70) est disposée au-dessus de l'extrémité aval (60b) de la conduite amont (60).

4. Séparateur d'eau de condensation (50) selon l'une des revendications 1 à 3, comprenant en outre un filtre (95) disposé entre l'extrémité aval (60b) de la conduite amont (60) et l'extrémité amont (70a) de la conduite aval (70) dans le réservoir (80), ledit filtre (95) séparant l'eau de condensation de l'air d'admission ou d'évacuation s'écoulant.

5. Séparateur d'eau de condensation (50) selon l'une des revendications 1 à 4, où la surface de collision (82a) est disposée verticalement.

6. Séparateur d'eau de condensation (50) selon l'une des revendications 1 à 5, où la surface de collision (82a) a un guidage (82b) disposé à l'extérieur de la conduite amont (60) vue dans la direction axiale de la conduite amont (60) et guidant l'eau de condensation, et où
ledit guidage (82b) est une rainure prévue sur la surface de collision (82a).

7. Séparateur d'eau de condensation (50) selon l'une des revendications 1 à 6, où la surface de collision (82a) a une affinité à l'eau de condensation supérieure à l'affinité d'une surface lisse à l'eau de condensation.

8. Séparateur d'eau de condensation (50) selon l'une des revendications 1 à 7, où le réservoir (80) a une paroi extérieure pourvue d'ailettes (97).

9. Séparateur d'eau de condensation (50) selon l'une des revendications 1 à 8, comprenant en outre un limiteur de débit (96, 98) faisant saillie du réservoir (80) vers l'intérieur.
